(19) Europäisches Patentamt / European Patent Office / Office européen des brevets

(11) **EP 4 697 094 A1**

(12) **EUROPEAN PATENT APPLICATION**
published in accordance with Art. 153(4) EPC

(43) Date of publication:
**18.02.2026  Bulletin 2026/08**

(21) Application number: **24822326.5**

(22) Date of filing: **20.03.2024**

(51) International Patent Classification (IPC):
**G03B 27/10** (2006.01)    **G03B 21/20** (2006.01)

(52) Cooperative Patent Classification (CPC):
**G03B 21/20; G03B 27/10**

(86) International application number:
**PCT/CN2024/082720**

(87) International publication number:
**WO 2024/255370 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **13.06.2023  CN 202310696795**

(71) Applicant: **XGIMI Technology Co., Ltd.
Chengdu, Sichuan 610041 (CN)**

(72) Inventors:
• **PENG, Shuihai
  Chengdu, Sichuan 610041 (CN)**
• **HE, Lei
  Chengdu, Sichuan 610041 (CN)**
• **QIN, Zhipeng
  Chengdu, Sichuan 610041 (CN)**
• **CHEN, Yixue
  Chengdu, Sichuan 610041 (CN)**

(74) Representative: **Slingsby Partners LLP
1 Kingsway
London WC2B 6AN (GB)**

(54)    **LIGHT SOURCE SYSTEM AND PROJECTION DEVICE**

(57)    A light source system and a projection device. In the light source system, when a light source (01) and a lens group (03) are off-axis, that is, light generated by the light source (01) is directly incident into the lens group (03) via a light guide element (02) or an avoidance light guide element (02), the optical axis of a light spot and the optical axis of the lens group are spaced apart by a certain distance. After being focused by the lens group, the light serves as excitation light of a wavelength conversion region, so that loss of light of a first color and excited light of a second color on the light guide element (02) may be reduced. Moreover, when the excited light of a second color is finally incident into a light homogenizing element (12), the formed light spot may be oval and corresponds to long and short edges of the light homogenizing element (12), thereby improving the utilization rate of the light, so that the brightness of the projection device may be improved.

**Fig. 5**

**Description**

**TECHNICAL FIELD**

The present disclosure relates to the technical field of projection display, and in particular to a light source system and a projection device.

**BACKGROUND**

In projection display products, the light source system is a very important component. Its function is to convert light of different colors, different angle distributions, different brightness, and different shapes into uniform light spots that illuminate an effective region of a display chip.

In the field of projection display, traditional light bulbs are used less and less due to their own defects, while new light sources, such as LED, phosphor, and laser, show excellent performances in various aspect, such as brightness, color, service life, and energy consumption, and gradually become the mainstream of light sources for projection display. As a light source, laser has advantages of high brightness and high light efficiency, and blue laser excitation fluorescence is often used as a light source. However, in the existing system, the spectroscopic element needs to be coated with a film that transmits blue light and reflects fluorescence, and a thickness of a spectroscopic sheet generally ranges from 0.5 mm to 1.1 mm, which absorbs blue light. Finally, the coating and absorption cause the brightness of the blue laser to lose 2% to 5%, resulting in the brightness loss of the light source of the projection optical engine and the decrease of light utilization rate. Meanwhile, a focused spot of blue laser in a conventional system is typically circular, but a spatial light modulator in a projection system is typically rectangular, such as an aspect ratio of 16: 9, and a laser focused spot is elliptical according to the matching of Étendue, which will greatly improve system efficiency.

**SUMMARY**

The present disclosure provides a light source system that is applicable to a projection device, which can improve the utilization rate of light, and thus improve the brightness of the projection device.

In a first aspect, the present disclosure provides a light source system. The light source system includes a light source, a first lens group, a wavelength conversion element, a light guiding assembly, and a light homogenizing element. The light guiding assembly includes a light guiding element, and the wavelength conversion element includes a wavelength conversion region and a reflection region. A first-color light generated by the light source is incident on the first lens group through the light guiding element, or the first-color light generated by the light source is incident on the first lens group. When the first-color light is incident on the wavelength conversion region after being focused by the first lens group, the wavelength conversion region is excited by the first-color light to emit a second-color light, the second-color light is incident on the first lens group, and is incident on the light guiding assembly through the first lens group. When the first-color light is incident on the reflection region after being focused by the first lens group, the first-color light is reflected by the reflection region, and is incident on the light guiding assembly through the first lens group. The first-color light or the second-color light that is incident on the light guiding assembly is incident on the light homogenizing element through the light guiding assembly, and then exits after being homogenized by the light homogenizing element. A light spot of the second-color light emitted from the first lens group is elliptical, and a distance between an optical axis of the first-color light emitted from the light source to the first lens group and an optical axis of the first lens group is a first distance.

In some embodiments, a beam contracting lens group is further provided between the light source and the light guiding element, and the first-color light generated by the light source is contracted by the beam contracting lens group and is then incident on the light guiding element.

In some embodiments, a diffuser is further provided between the light source and the light guiding element, the first-color light generated by the light source is diffused and homogenized by the diffuser and is then incident on the light guiding element, and a diffusion angle of the diffuser is a first angle.

In some embodiments, an aperture is provided on a side of the light guiding element facing toward the light source, and the first-color light generated by the light source is incident on the light guiding element through the aperture.

In some embodiments, the first lens group includes at least one aspherical mirror and at least one spherical mirror. The aspherical mirror includes a surface having a radius of curvature within a first preset radius range and an aspherical coefficient within a first preset coefficient range, and includes another surface having a radius of curvature within the first preset radius range and an aspherical coefficient within a second preset coefficient range. The spherical mirror includes a surface having a radius of curvature within a second preset radius range, and another surface having a radius of curvature within a third preset radius range.

In some embodiments, the light guiding element includes a target light-transmitting region, and the first-color light generated by the light source transmits the target light-transmitting region to reach the first lens group, and a length of a

**EP 4 697 094 A1**

target side of the target light-transmitting region being determined according to a length of a long side of the light guiding element, the first distance, and a length of a long axis of a light spot of the first-color light.

In some embodiments, a distance between a lens closest to the wavelength conversion element in the first lens group and the wavelength conversion element is a second distance; and/or an angle between the light guiding element and the wavelength conversion element is a second angle; and/or an angle between a central ray of the first-color light emitted from the first lens group to the wavelength conversion element and a normal line of the wavelength conversion element is greater than or equal to a preset angle; and/or the light guiding element includes a target light-transmitting region, which is one of a through-hole, a diffusion region, an anti-reflection region, a polarizing light splitting region, and a dichroic region.

In some embodiments, the light guiding assembly includes an adjustable element and a light splitting and combining element; and a light spot of the first-color light and a light spot of the second-color light are symmetrically incident on the light homogenizing element, and a long axis and a short axis of a light spot of at least one of the second-color light or the first-color light respectively correspond to a long side and a short side of a light incident surface of the light homogenizing element; and/or a distance between the adjustable element and the light guiding element or the light splitting and combining element is a third distance.

In some embodiments, the light source system includes a color filter element, the first-color light or the second-color light that is incident on the light guiding assembly is incident on the color filter element through the light guiding assembly, and is incident on the light homogenizing element after being filtered by the color filter element. The light guiding assembly includes an adjustable element, a second lens group, a light splitting and combining element, and a third lens group; the light guiding element is configured to reflect the first-color light and the second-color light, and the light splitting and combining element is configured to transmit the first-color light and reflect the second-color light; the second-color light is incident on the light guiding element through the first lens group, is reflected by the light guiding element and then transmits the second lens group to reach the light splitting and combining element, is reflected by the light splitting and combining element to the third lens group, and is incident on the color filter element through the third lens group; and the first-color light reflected by the reflection region is incident on the light guiding element, is reflected by the light guiding element and then transmits the second lens group and the light splitting and combining element to reach the adjustable element, is reflected by the adjustable element and transmits the light splitting and combining element to reach the third lens group, and is incident on the color filter element through the third lens group.

Alternatively, the light guiding assembly includes an adjustable element, a second lens group, a light splitting and combining element, and a third lens group; the light guiding element is configured to reflect the first-color light and the second-color light, and the adjustable element is configured to transmit the second-color light and reflect the first-color light; the first-color light reflected by the reflection region is incident on the light guiding element, is reflected by the light guiding element and then transmits the second lens group to reach the adjustable element, is reflected by the adjustable element to the third lens group, and is incident on the color filter element through the third lens group; and the second-color light is incident on the light guiding element through the first lens group, is reflected by the light guiding element and then transmits the second lens group and the adjustable element to reach the light splitting and combining element, is reflected by the light splitting and combining element to the third lens group, and is incident on the color filter element through the third lens group.

Alternatively, the light guiding assembly includes an adjustable element and a third lens group, and the light guiding element is configured to transmit the first-color light and reflect the second-color light; the first-color light reflected by the reflection region is incident on the light guiding element, transmits the light guiding element to reach the adjustable element, is reflected by the adjustable element back to the light guiding element, and transmits the light guiding element and the third lens group to reach the color filter element after; and the second-color light is incident on the light guiding element through the first lens group, is reflected by the light guiding element, and then transmits the third lens group to reach the color filter element.

Alternatively, the light guiding assembly includes an adjustable element, a second lens group, a light splitting and combining element, and a third lens group, and the light guiding element is configured to transmit the first-color light and reflect the second-color light; the first-color light reflected by the reflection region is incident on the light guiding element, transmits the light guiding element to reach the adjustable element, is reflected by the adjustable element back to the light guiding element, transmits the light guiding element and the second lens group to reach the light splitting and combining element, and is incident on the color filter element through the light splitting and combining element and the third lens group; and the second-color light is incident on the light guiding element through the first lens group, is reflected by the light guiding element and then transmits the second lens group to reach the light splitting and combining element, and is incident on the color filter element through the light splitting and combining element and the third lens group.

Alternatively, the light guiding assembly includes an adjustable element, a second lens group, a light splitting and combining element, and a third lens group, the adjustable element is configured to reflect the first-color light and transmit the second-color light, and the light guiding element is configured to reflect the second-color light; the first-color light reflected by the reflection region is incident on the adjustable element, is reflected by the adjustable element to the second lens group, is incident on the light splitting and combining element through the second lens group, and is incident on the

3

color filter element through the light splitting and combining element and the third lens group; and the second-color light is incident on the adjustable element through the first lens group, transmits the adjustable element to reach the light guiding element, is reflected by the light guiding element to reach the second lens group, transmits the second lens group to reach the light splitting and combining element, and is incident on the color filter element through the light splitting and combining element and the third lens group.

Alternatively, the light guiding assembly includes an adjustable element and a third lens group, the adjustable element is configured to reflect the first-color light and transmit the second-color light, and the light guiding element is configured to reflect the second-color light; the first-color light reflected by the reflection region is incident on the adjustable element, is reflected by the adjustable element to the third lens group, and is incident on the color filter element through the third lens group; and the second-color light is incident on the adjustable element through the first lens group, transmits the adjustable element to reach the light guiding element, is reflected by the light guiding element to reach the third lens group, and is incident on the color filter element through the third lens group.

Alternatively, the light guiding assembly includes a third lens group; the light guiding element is configured to reflect the first-color light and the second-color light; the first-color light reflected by the reflection region is incident on the light guiding element, is reflected by the light guiding element, and then transmits the third lens group to reach the color filter element; and the second-color light is incident on the light guiding element through the first lens group, is reflected by light guiding element, and then transmits the third lens group to reach the color filter element.

In some embodiments, the light source system includes a supplementary light source assembly, the light source system includes a light splitting and combining element, the light splitting and combining element is configured to reflect the first-color light and the second-color light and transmit supplementary light generated by the supplementary light source assembly; or the light splitting and combining element is configured to reflect the second-color light and transmit the first-color light and the supplementary light generated by the supplementary light source assembly; and the adjustable element is configured to reflect the first-color light and transmit the supplementary light generated by the supplementary light source assembly.

In some embodiments, the light splitting and combining element includes a supplementary light-transmitting region, which is configured to transmit the supplementary light generated by the supplementary light source assembly; and the supplementary light-transmitting region is one of a through-hole, a diffusion region, an anti-reflection region, a polarizing light splitting region, and a dichroic region.

In some embodiments, the supplementary light source assembly includes a first supplementary light source and a second supplementary light source, and the supplementary light includes light generated by a first-color light source and light generated by a second-color light source; and the supplementary light-transmitting region includes a first light-transmitting region and a second light-transmitting region, the first light-transmitting region is configured to transmit light generated by the first supplementary light source, and the second light-transmitting region is configured to transmit light generated by the second supplementary light source.

In some embodiments, the supplementary light source assembly includes a polarizing light combining element, the supplementary light source assembly includes a first supplementary light source and a second supplementary light source, and the first supplementary light source and the second supplementary light source are configured to generate light having different polarization states, respectively; and the light having different polarization states respectively generated by the first supplementary light source and the second supplementary light source are combined by the polarizing light combining element and then incident on the supplementary light-transmitting region.

In some embodiments, the supplementary light-transmitting region is configured to reflect light having a first polarization state and transmit light having a second polarization state, the supplementary light includes target light capable of exciting the wavelength conversion region to generate a second-color light, and the target light is the light having the first polarization state; the light source system includes a color filter element, the color filter element includes a region capable of reflecting the target light, and a phase conversion element is provided between the color filter element and the light splitting and combining element; and when the first-color light is incident on the wavelength conversion region after being focused by the first lens group, the target light is incident on the color filter element through the supplementary light-transmitting region and the phase conversion element, is reflected by the color filter element, is converted into the light having the second polarization state by the phase conversion element again, is incident on the supplementary light-transmitting region, and is reflected by the supplementary light-transmitting region to finally reach the wavelength conversion region.

In some embodiments, the light source system includes a supplementary light source assembly, and the wavelength conversion element includes a transmitting region; and the supplementary light generated by the supplementary light source assembly is incident on the first lens group through the transmitting region of the wavelength conversion element, is incident on the light guiding assembly through the first lens group, is incident on the light homogenizing element through the light guiding assembly, and then exits after being homogenized by the light homogenizing element.

In some embodiments, the light source system includes a supplementary light source assembly, and supplementary light generated by the supplementary light source assembly is incident on the light guiding assembly through the light guiding element, is incident on the light homogenizing element through the light guiding assembly, and then exits after being homogenized by the light homogenizing element.

In a second aspect, the present disclosure provides a projection device which includes the light source system according to any one of the first aspect and possible embodiments of the first aspect.

According to the light source system provided in the present disclosure, the light source and the lens group are provided off-axis, that is, when the first-color light generated by the light source is incident on the lens group through the light guiding element or is directly incident on the lens group without through the light guiding element, a certain distance is formed between an optical axis of the light spot and an optical axis of the lens group, and the first-color light serves as excitation light for the wavelength conversion region after being focused by the lens group, such that loss of the first-color light and excited second-color light on the light guiding element can be reduced. Moreover, when the excited second-color light is finally incident on the light homogenizing element, a formed light spot has a shape of ellipse elliptical which corresponds to a long side and a short side of the light homogenizing element, thereby improving a utilization rate of the light. Furthermore, the diffuser can be provided before light generated by the light source is incident on the wavelength conversion region, which can reduce an energy density of the light on the wavelength conversion region and improve an excitation efficiency of a wavelength conversion material. A through-hole can be provided in the light guiding element, and the first-color light is incident on the lens group through the through-hole to reduce loss of the first-color light when it passes through the light guiding element. Additionally, by providing the beam contracting lens group before the light generated by the light source is incident on the light guiding element, an area of the through-hole can be smaller, such that an overlapping area between the through-hole and a light spot of the second-color light can be smaller, and the loss of the second-color light can be lower. The light source system in the embodiments can improve the utilization rate of light and thus improve brightness of the projection device.

## BRIEF DESCRIPTION OF THE DRAWINGS

The above and other objects, features, and advantages of the present disclosure will become more apparent from a more detailed description of embodiments of the present disclosure combining the drawings. The drawings are intended to provide a further understanding of the embodiments of the present disclosure and constitute a part of the specification, and serve to explain the present disclosure together with the embodiments, but do not limit the present disclosure. In the drawings, same reference numerals generally represent same components or steps, in which:

Fig. 1 is a schematic diagram of a light source system according to an embodiment of the present disclosure;
Fig. 2 is a schematic diagram of a light guiding element according to an embodiment of the present disclosure;
Fig. 3 is a schematic diagram of a light source system according to another embodiment of the present disclosure;
Fig. 4 is a schematic diagram of a light source system according to another embodiment of the present disclosure;
Fig. 5 is a schematic diagram of a light source system according to another embodiment of the present disclosure;
Fig. 6 is a schematic diagram of a light source system according to another embodiment of the present disclosure;
Fig. 7 is a schematic diagram of a light source system according to another embodiment of the present disclosure;
Fig. 8 is a schematic diagram of a light source system according to another embodiment of the present disclosure;
Fig. 9 is a schematic diagram of a light source system according to another embodiment of the present disclosure;
Fig. 10 is a schematic diagram of a light source system according to another embodiment of the present disclosure;
Fig. 11 is a schematic diagram of a light source system according to another embodiment of the present disclosure;
Fig. 12 is a schematic diagram of a light source system according to another embodiment of the present disclosure;
Fig. 13 is a schematic diagram of a light source system according to another embodiment of the present disclosure;
Fig. 14 is a schematic diagram of a light source system according to another embodiment of the present disclosure;
Fig. 15 is a schematic diagram of a light source system according to another embodiment of the present disclosure;
Fig. 16 is a schematic diagram of a light source system according to another embodiment of the present disclosure;
Fig. 17 is a schematic diagram of a light source system according to another embodiment of the present disclosure;
Fig. 18 is a schematic diagram of a light source system according to another embodiment of the present disclosure; and
Fig. 19 is a schematic diagram of a projection device according to an embodiment of the present disclosure.

## DETAILED DESCRIPTION

In order to enable those skilled in the art to better understand the technical solutions in the present disclosure, the technical solutions in the embodiments of the present disclosure will be clearly and completely described below with reference to the drawings in the embodiments of the present disclosure, and it is obvious that the described embodiments are only a part of the embodiments of the present disclosure, but not all of the embodiments. It should be understood that, the specific embodiments described herein are merely for illustration of the present disclosure but are not intended to limit the present disclosure. Based on the embodiments in the present disclosure, all other embodiments obtained by those skilled in the art without inventive effort should belong to the protection scope of the present disclosure. In addition, although the disclosure in this application is described in terms of one or more exemplary examples, it is to be understood that, various aspects of these disclosures can also constitute a complete technical solution alone. The following embodiments and features in the embodiments can be combined with each other as long as there is no conflict.

In the embodiments of the present disclosure, words such as "exemplarily" and "for example" are used for meaning examples, illustrations, or explanations. Any embodiment or design described as an "example" in this application should not be construed as being more preferred or superior to other embodiments or designs. Rather, the use of the word "example" is intended to present concepts in a specific manner.

Unless otherwise defined, technical terms or scientific terms used herein should have their ordinary meaning as understood by one of ordinary skill in the art to which the present disclosure belongs. The words "first," "second", and similar words used in the present disclosure do not indicate any order, quantity, or importance, but are merely used for distinguishing the description. The words such as "comprising" or "including" mean that an element or item that appears before the word encompasses the element or item that appears after the word and its equivalents, and does not exclude other elements or items. The term "and/or" includes any and all combinations of one or more associated listed items.

In order to thoroughly understand the present disclosure, a detailed description will be provided below in order to explain the technical solutions of the present disclosure. The preferred embodiments of the present disclosure will be described in detail below. However, the present disclosure can have other embodiments in addition to these detailed descriptions.

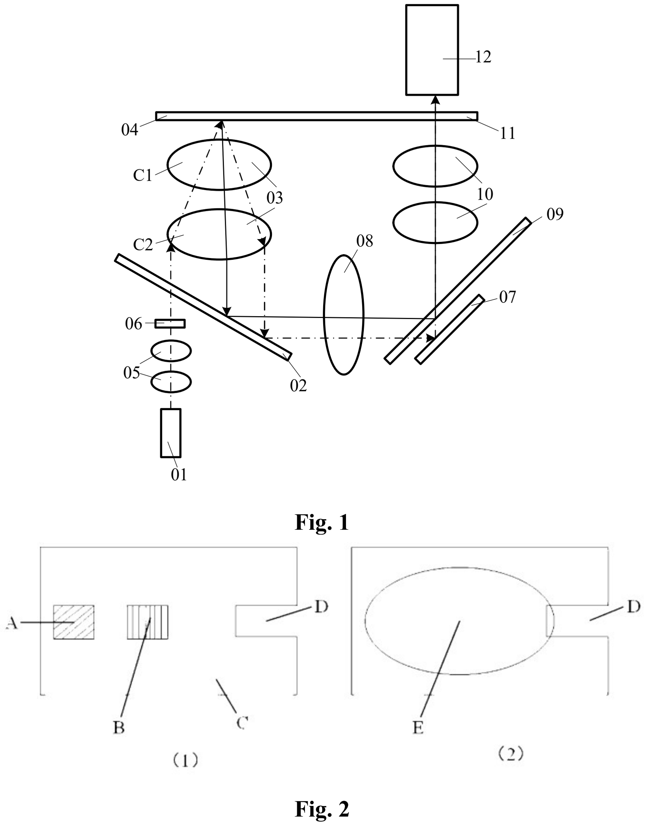

This embodiment provides a light source system. As shown in Fig. 1, the light source system includes a light source 01, a first lens group 03, a wavelength conversion element 04, a light guiding assembly, and a light homogenizing element 12. The light guiding assembly includes a light guiding element 02, and the wavelength conversion element 04 has a wavelength conversion region and a reflection region.

A first-color light generated by the light source 01 is incident on the first lens group 03 through the light guiding element 02, or the first-color light generated by the light source 01 is incident on the first lens group 03; when the first-color light is incident on the wavelength conversion region after being focused by the first lens group 03, the wavelength conversion region is excited by the first-color light to emit a second-color light, the second-color light is incident on the first lens group 03, and is incident on the light guiding assembly through the first lens group 03; when the first-color light is incident on the reflection region after being focused by the first lens group 03, the first-color light is reflected by the reflection region, and is incident on the light guiding assembly through the first lens group 03.

The first-color light or the second-color light which is incident on the light guiding assembly is incident on the light homogenizing element 12 through the light guiding assembly, and then exits after being homogenized by the light homogenizing element 12. Optionally, the light source system includes a color filter element 11, the first-color light or the second-color light that is incident on the light guiding assembly is incident on the color filter element 11 through the light guiding assembly, is filtered by the color filter element 11, and then is incident on the light homogenizing element 12.

A light spot of the second-color light emitted from the first lens group is elliptical; and a distance between an optical axis of the first-color light emitted from the light source 01 to the first lens group and an optical axis of the first lens group is a first distance.

Optionally, in a condition that the first lens group includes a first lens and a second lens, the first distance $L_1$ satisfies the following formula:

$$L_1 \geq \frac{\frac{n_1^2 n_2^2 r_{11} r_{12} r_{21} r_{22}}{(n_1-1)(r_{12} n_1^2 - r_{11} n_1^2 + d_1 n_1 - d_1)(n_2-1)(r_{22} n_2^2 - r_{21} n_2^2 + d_2 n_2 - d_2)}}{\frac{n_1^2 r_{11} r_{12}}{(n_1-1)(r_{12} n_1^2 - r_{11} n_1^2 + d_1 n_1 - d_1)} + \frac{n_2^2 r_{21} r_{22}}{(n_2-1)(r_{22} n_2^2 - r_{21} n_2^2 + d_2 n_2 - d_2)} - D} \tan 25°$$

$$L_1 \leq \frac{\frac{n_1^2 n_2^2 r_{11} r_{12} r_{21} r_{22}}{(n_1-1)(r_{12} n_1^2 - r_{11} n_1^2 + d_1 n_1 - d_1)(n_2-1)(r_{22} n_2^2 - r_{21} n_2^2 + d_2 n_2 - d_2)}}{\frac{n_1^2 r_{11} r_{12}}{(n_1-1)(r_{12} n_1^2 - r_{11} n_1^2 + d_1 n_1 - d_1)} + \frac{n_2^2 r_{21} r_{22}}{(n_2-1)(r_{22} n_2^2 - r_{21} n_2^2 + d_2 n_2 - d_2)} - D} \tan 75°$$

where $n_1$ represents a refractive index of the first lens, $r_{11}$ represents a radius of curvature of a first surface of the first lens, $r_{12}$ represents a radius of curvature of a second surface of the first lens, and $d_1$ represents a center thickness of the first lens; $n_2$ represents a refractive index of a second lens, $r_{21}$ represents a radius of curvature of a first surface of the second lens, $r_{22}$ represents a radius of curvature of a second surface of the second lens, and $d_2$ represents a center thickness of the second lens; and D represents a distance between the first lens and the second lens. For example, a value of the first distance can be in a range of 2 mm to 12 mm. Optionally, an angle between the first-color light and a normal line of the wavelength conversion element ranges from 25 degrees to 75 degrees.

The light source 01 and the first-color light are not limited, and the light source 01can be a light-emitting diode (LED) light source or a laser diode (LD) light source or other new light sources, or a mixed light source of the LED light source and the LD light source. The number of light-emitting chips in the light source 01 is not limited, and the light source 01 can includes a single light-emitting chip or an array of light-emitting chips. For example, the light source 01 can be an LD light source configured to generate blue laser, and the first-color light can be blue laser, ultraviolet (UV) light, or the like.

The wavelength conversion region includes a wavelength conversion material, and the wavelength conversion material can be a phosphor or a phosphor powder, for example, a yellow phosphor that is excited to emit yellow light (e.g., an yttrium aluminum garnet (YAG)-based phosphor containing cerium (Ce) serving as an activator), or green phosphor powder, red phosphor powder, or cyan phosphor powder. The wavelength conversion region can include at least one sub-region, and each sub-region corresponds to one wavelength conversion material, and can generate at least one colorful light having a wavelength band different from a wavelength band of the first-color light. That is, the second-color light includes at least one colorful light having a wavelength band different from the wavelength band of the first-color light, for example, the second-color light can be at least one of red light, green light, yellow light, and blue light.

The reflection region has a property of reflecting all light rays, and can be, for example, any one of a mirror, a polished metal layer or metal plate, a substrate coated with a reflective film, particles with diffuse reflection, and a micro-structured reflective layer. Optionally, a reflective surface of the reflection region is substantially on a same plane as the wavelength conversion region.

The color filter element can be a filter wheel including a plurality of filter regions for filtering the first-color light, the second-color light, and the supplementary light. For example, the color filter element includes filter regions for filtering blue light, red light, and green light. For the color filter element, one surface can be coated with a dichroic film, and another surface is a diffuser; or the color filter element can have a double-layer structure, of which one layer is a diffuser and the other layer is an optical filter. The color filter element 11 and the wavelength conversion element 04 can be driven by a common driving device or can be driven by different driving devices. The light homogenizing element can be a fly-eye lens, a light pipe, or the like.

Optionally, the first lens group 03 includes at least one aspherical mirror and at least one spherical mirror; one surface of the aspherical mirror has a radius of curvature within a first preset radius range and an aspherical coefficient within a first preset coefficient range, another surface of the aspherical mirror has a radius of curvature within the first preset radius range and an aspherical coefficient within a second preset coefficient range; and one surface of the spherical mirror has a radius of curvature within a second preset radius range, and another surface of the spherical mirror has a radius of curvature within a third preset radius range. The first preset radius range, the second preset radius range, the third preset radius range, the first preset coefficient range, and the second preset coefficient range are not limited, and can be customized according to the actual application situation. For example, one surface of the aspherical mirror has the radius of curvature ranging from 15 mm to 30 mm, and the aspherical coefficient ranging from 1 to 2; another surface of the aspherical mirror has the radius of curvature ranging from 15 mm to 30 mm, and the aspherical coefficient ranging from 0.3 to 1; and one surface of the spherical mirror has the radius of curvature ranging from 10 mm to 20 mm, and another surface of the spherical mirror is greater than or equal to 150. For another example, one surface of the aspherical mirror has the radius of curvature ranging from -30 mm to 30 mm, and the aspherical coefficient ranging from -20 to 20; another surface of the aspherical mirror has the radius of curvature rangeing from -30 mm to 30 mm, and the aspherical coefficient ranging from -10 to 10; and one surface of the spherical mirror has the radius of curvature ranging from 10 mm to 20 mm, and another surface of the spherical mirror has the radius of curvature greater than or equal to 100. As shown in Fig. 1, it can be set that, C1 is a spherical mirror and C2 is an aspherical mirror, or C2 is a spherical mirror and C1 is an aspherical mirror. By reasonably setting the curvature parameters of the lens group (radius of curvature, aspherical coefficient, or the like), the light spot of the generated second-color light can be elliptical, which better matches a shape of the subsequent light homogenizing element to improve the light utilization rate.

Optionally, a distance between a lens closest to the wavelength conversion element 04 in the first lens group 03 and the wavelength conversion element 04 is a second distance. The second distance is not limited and can be customized according to the actual application situation. For example, a value of the second distance can range from 0.5 mm to 1.5 mm. As shown in Fig. 1, a distance between a surface of the lens C1 and a surface of the wavelength conversion element 04 facing toward the lens C1 ranges from 0.5 mm to 1.5 mm.

Optionally, an angle between a central ray of the first-color light emitted from the first lens group 03 to the wavelength conversion element 04 and a normal line of the wavelength conversion element 04 is greater than or equal to a preset angle. The preset angle is not limited, and the preset angle can be determined according to the first distance and at least one curvature parameter of the first lens group, and can be 51 degrees, for example. Optionally, an angle between the first-color light and a normal line of the wavelength conversion element ranges from 25 degrees to 75 degrees. By setting a suitable incident angle on the wavelength conversion element, when the first-color light reflected by the reflection region passes through the first lens group, the light guiding assembly and the like and then is incident on the light homogenizing element, the light spot is symmetrically incident on the light homogenizing element, such that the utilization rate of light can be improved.

In some embodiments, the light guiding element 02 includes a target light-transmitting region, and the first-color light generated by the light source 01 transmits the target light-transmitting region to reach the first lens group 03.

Optionally, an overlapping area between the target light-transmitting region and a light spot region formed by the second-color light on the light guiding element is smaller than or equal to a preset ratio of an area of the target light-transmitting region. The preset ratio is not limited, and can be customized according to the actual application situation, for example, the ratio ranges from 0 to 10%. A shape of the target light-transmitting region is not limited, and can be rectangular, circular, elliptical, or the like.

Optionally, a length of a target side of the target light-transmitting region is determined according to a length of a long side of the light guiding element, the first distance, and a length of a long axis of a light spot of the first-color light. The target side can be a side parallel to a long axis of the second-color light or a long side of the light guiding element.

Optionally, the length L of the target side of the target light-transmitting region satisfies the following formula:

$$\frac{D_2}{COS\theta} \leq L \leq \frac{D_1}{2COS\theta} - \frac{L_1}{COS\theta} + \frac{D_2}{2CO}$$

where $D_1$ represents the length of the long side of the light guiding element, $L_1$ represents the first distance, $D_2$ represents the length of the long axis of the light spot of the first-color light emitted from the light source to the light guiding element, and $\theta$ represents an angle between the light guiding element and an optical axis of the first lens group.

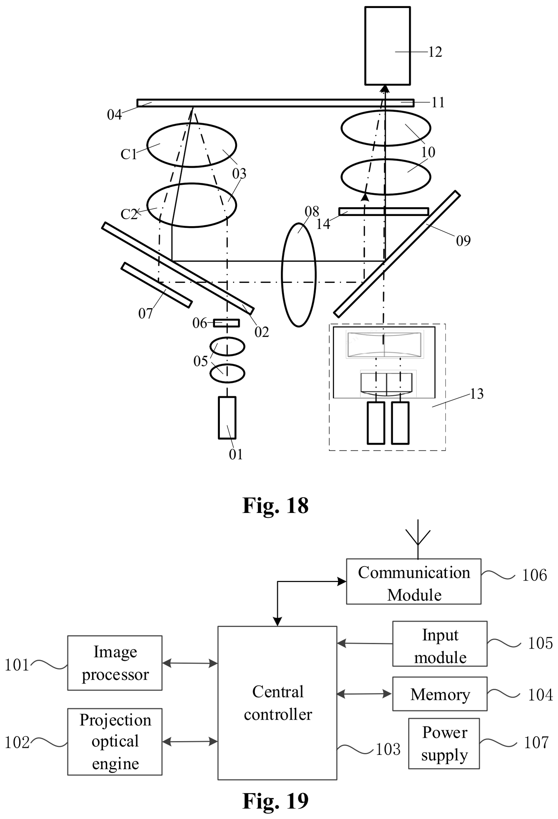

Optionally, $D_3 \sin \alpha \leq L_2 \sin \beta$, where $L_2$ can represent a length of a long axis of a spatial light modulator in a projection optical engine shown in Fig. 19, $D_3$ represents a length of a long axis of a light spot of the excited light emitted from the first lens group, $\alpha$ represents a divergence angle of a light spot before the second-color light is incident on the light guiding element, and $\beta$ represents an angle corresponding to the numerical aperture of the illumination (an angle of the light beam incident on the spatial light modulator).

For example, a size of the target light-transmitting region can range from 11 mm * 15 mm to 9.4 mm * 4.5 mm. That is, the length of the target side can range from 9.4 mm to 15 mm.

Optionally, the target light-transmitting region can be any one of a through-hole, a diffusion region, an anti-reflection region, a polarizing light splitting region, and a dichroic region. The diffusion region can be a diffuser; the anti-reflection region can be a light-transmitting substrate coated with an anti-reflection film; the polarizing light splitting region can be a light-transmitting substrate coated with a polarizing beam splitting film (such as reflecting or transmitting S light, transmitting or reflecting P light) or a polarizing beam splitting sheet; and the dichroic region can be a light-transmitting substrate coated with a dichroic film. The dichroic film transmits the first-color light and reflects the second-color light. For example, the dichroic film transmits blue light and reflects red and green light, and a reflection band can include at least 500 nm to 680 nm, and a transmission band can include a range from 440 nm to 470 nm. As shown in Fig. 2 (2), E represents a light spot region formed by the second-color light on the light guiding element, and D represents a target light-transmitting region. Optionally, the target light-transmitting region can be located at either end of the light guiding element. The target light-transmitting region is a through-hole, such that there is no loss or relatively less loss for the first-color light when the first-color light passes through the light guiding element.

Optionally, a light spot size of the first-color light reflected by the reflection region is greater than or equal to a light spot size of the first-color light when the first-color light passes through the target light-transmitting region. That is, the light spot size of the first-color light when the first-color light passes through the target light-transmitting region should be as small as possible to reduce a size of the target light-transmitting region and thus further reduce a loss of the first-color light on the light guiding element.

Optionally, the first-color light generated by the light source 01 can also avoid the light guiding element 02 and directly incident on the first lens group bypassing a side of the light guiding element 02, thereby reducing the loss of the first-color light on the light guiding element. Optionally, the light guiding element 02 can be an L-shaped element at one end, and the first-color light is incident on the first lens group from the L-shaped end.

Optionally, an angle between the light guiding element 02 and the wavelength conversion element 04 is a second angle. The second angle can be customized according to the actual application situation. For example, a value of the second angle can range from 30 degrees to 45 degrees. For example, when the light guiding element is disposed at 45 degrees with respect to a horizontal line, an inclination angle of the wavelength conversion element with respect to the horizontal line is set to be in a range of 0 degrees to 15 degrees, such that the angle between the light guiding element 02 and the wavelength conversion element 04 ranges from 30 degrees to 45 degrees.

In some embodiments, as shown in Fig. 1, a beam contracting lens group 05 is provided between the light source 01 and the light guiding element 02, and the first-color light generated by the light source 01 is contracted by the beam contracting lens group 05 and then is incident on the light guiding element 02. By making the size of the light spot incident on the light guiding element as small as possible by the beam contracting lens group, the loss of the first-color light incident on the light guiding element at the target light-transmitting region can be reduced, and the utilization rate of light can be improved. Optionally, the beam contracting lens group can include a collimating lens, or the beam contracting lens group can be replaced with a collimating lens; or, the beam contracting lens group can be a beam expanding lens group.

In some embodiments, as shown in Fig. 1, a diffuser 06 is provided between the light source and the light guiding element, and the first-color light generated by the light source or contracted first-color light is diffused and homogenized by the diffuser 06 and then is incident on the light guiding element. A diffusion angle of the diffuser is a first angle, and the diffusion angle can refer to a half-viewing angle or a full-viewing angle. The first angle can be customized according to the actual application situation. For example, a value of the full-viewing angle can range from 3 degrees to 6 degrees. Optionally, a distance between the diffuser and the light guiding element is smaller than a target distance, and the target distance can be customized according to the actual application situation. That is, the distance between the diffuser and the light guiding element should be as short as possible. The diffused first-color light is incident on the wavelength conversion region, an energy density of the first-color light on the wavelength conversion region is reduced, and an excitation efficiency of the wavelength conversion region can be improved. For example, the energy density can be set to smaller than or equal to 150 W/mm$^2$. Optionally, the positions of the diffuser and the beam contracting lens group can be exchanged, that is, the first-color light first passes through the diffuser and then passes through the beam contracting lens group. Optionally, the beam contracting lens group can also be replaced with a beam expanding lens group, and the first-color light is expanded by the beam expansion lens group and diffused by the diffuser, and then is incident on the light guiding element through an aperture.

In some embodiments, an aperture is provided on a side of the light guiding element 02 facing toward the light source, and the first-color light generated by the light source, the diffused and homogenized first-color light, or the contracted first-color light is incident on the light guiding element through the aperture. The aperture can prevent the first-color light from entering a region outside the target light-transmitting region, reduce the loss of the first-color light, and effectively improve the utilization rate of the light. Moreover, when the first-color light is incident on the wavelength conversion region through the first lens group, the energy density is relatively low, which can improve the excitation efficiency of the wavelength conversion region.

Optionally, the second-color light emitted from the first lens group is elliptical, which is determined by factors such as at least one curvature parameter of the first lens group, a light spot size of the first-color light, an off-axis degree (a first distance between an optical axis of the first-color light and an optical axis of the first lens group), a diffusion angle of the diffuser, and the like.

In some embodiments, the light guiding assembly includes an adjustable element 07 and a light splitting and combining element 09. A light spot of the first-color light and a light spot of the second-color light are symmetrically incident on the light homogenizing element, and a long axis and a short axis of a light spot of the second-color light and/or the first-color light respectively correspond to a long side and a short side of a light incident surface of the light homogenizing element. For example, when incident on the light homogenizing element, optical axes of the light spot of the first-color light and the light spot of the second-color light coincide with a central axis of the light incident surface of the light homogenizing element. That is, a distance between a center of the light spot and one end of the long axis of the light homogenizing element is equal to a distance between the center of the light spot and the other end of the long axis of the light homogenizing element, a distance between the center of the light spot and one end of the short axis of the light homogenizing element is equal to a distance between the center of the light spot and the other end of the short axis of the light homogenizing element, and the first-color light and the second-color light are incident on the light homogenizing element coaxially or nearly coaxially. For example, in a condition that the light homogenizing element is a light pipe, the long axis and the short axis of the light spot of the second-color light and/or the first-color light respectively correspond to a long side and a short side of the light pipe; in a condition that the light homogenizing element is a fly-eye lens, the long axis and the short axis of the light spot of the second-color light and/or the first-color light respectively correspond to a long side and a short side of each small cell of the fly-eye lens. In this manner, a shape of the light spot can be elliptical, which can better match a shape of the light homogenizing element. Moreover, the light is symmetrically incident on the light homogenizing element to better match the spatial light modulator in the projection optical engine and make the utilization rate of light higher.

Optionally, a distance between the adjustable element and the light guiding element or the light splitting and combining element is a third distance. The third distance can be customized according to the actual application situation. For example, a value of the third distance ranges from 3 mm to 10 mm. Optionally, an angle between the adjustable element and/or the light splitting and combining element and the horizontal line can range from 40 degrees to 50 degrees, or an angle between the adjustable element and an optical axis of the first-color light emitted from the light guiding element can range from 40 degrees to 50 degrees. The angle and positional relationships between the adjustable element and the light guiding element or the light splitting and combining element affect whether the first-color light and the second-color light can be incident on the light homogenizing element coaxially or nearly coaxially.

In some embodiments, as shown in Fig. 1, the light guiding assembly includes an adjustable element, a second lens group 08, a light splitting and combining element 09, and a third lens group 10. The color filter element 11 and the wavelength conversion element 04 share one driving device. The light guiding element 02 reflects the first-color light and the second-color light; the adjustable element 07 reflects the first-color light, and the adjustable element 07 can be a mirror or a reflective diffuser; and the light splitting and combining element 09 transmits the first-color light and reflects the second-color light. For example, the light guiding element 02 reflects blue light, red light, and green light, and the light guiding element 02 can be a mirror or a reflective diffuser having a target light-transmitting region; the light splitting and combining element 09 reflects red and green light and transmits blue light; a transmission wavelength band at least ranges from 450 nm to 470 nm, and a reflection wavelength band at least ranges from 510 nm to 680 nm; and the adjustable element 07 reflects blue light. Optionally, a distance between the adjustable element and the light splitting and combining element is a third distance.

The second-color light is incident on the light guiding element 02 through the first lens group 03, is reflected by the light guiding element 02 and then transmits the second lens group 08 to reach the light splitting and combining element 09, is reflected by the light splitting and combining element 09 to the third lens group 10, and is incident on the color filter element 11 through the third lens group 10; the first-color light reflected by the reflection region is incident on the light guiding element 02, is reflected by the light guiding element 02 and then transmits the second lens group 08 and the light splitting and combining element 09 to reach the adjustable element 07, is reflected by the adjustable element 07 and then transmits the light splitting and combining element 09 to reach the third lens group 10, and is incident on the color filter element 11 through the third lens group 10.

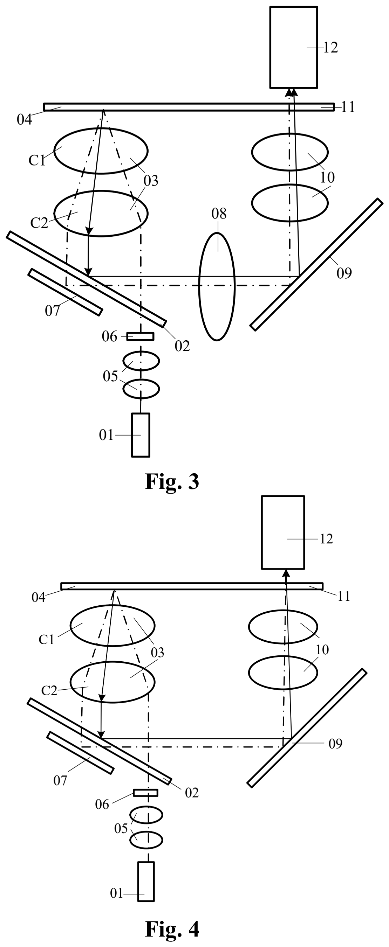

In some embodiments, as shown in Fig. 3, the light guiding assembly includes a second lens group 08, a light splitting and combining element 09, and a third lens group 10. The color filter element 11 and the wavelength conversion element 04 share one driving device. The light guiding element 02 transmits the first-color light and reflects the second-color light. For example, the light guiding element transmits blue light and reflects red and green light, a reflection wavelength band can include at least 500 nm to 680 nm, and a transmission wavelength band can include at least 440 nm to 470 nm. The number of lenses, the radius of curvature, the coefficient of curvature, and the like of the second lens group and the third lens group can be customized according to the actual application situation, and for example, both the second lens group and the third lens group can be spherical mirrors. The adjustable element 07 can be a mirror or a reflective diffuser. The light splitting and combining element 09 reflects the first-color light and the second-color light.

The first-color light reflected by the reflection region is incident on the light guiding element 02, transmits the light guiding element 02 to reach the adjustable element 07, is reflected by the adjustable element 07 back to the light guiding element 02, transmits the light guiding element 02 and the second lens group 08 to reach the light splitting and combining element 09, and is incident on the color filter element 11 through the light splitting and combining element 09 and the third lens group 10; the second-color light is incident on the light guiding element 02 through the first lens group 03, is reflected by the light guiding element 02 and then transmits the second lens group 08 to reach the light splitting and combining element 09, and is incident on the color filter element 11 through the light splitting and combining element 09 and the third lens group 10.

Optionally, the light guiding element 02 includes a region A, a region B, a region C, and a target light-transmitting region D. The region A and the region B transmit the first-color light and reflect the second-color light; the region C is a mirror or coated with a reflective film, which can enhance the reflection of the second-color light and reduce the loss of light; and the target light-transmitting region D can refer to the above description, and will not be repeated herein. For example, as shown in Fig. 2(1), the first-color light can transmit the region A to reach the adjustable element 07, and the first-color light that is reflected by the adjustable element 07 back to the light guiding element 02 transmits the region B to reach the second lens group 08.

Optionally, as shown in Fig. 4, the second lens group can be not provided, and then the third lens group includes at least one aspherical mirror. Other configurations can refer to those as shown in Fig. 3, and will not be repeated herein.

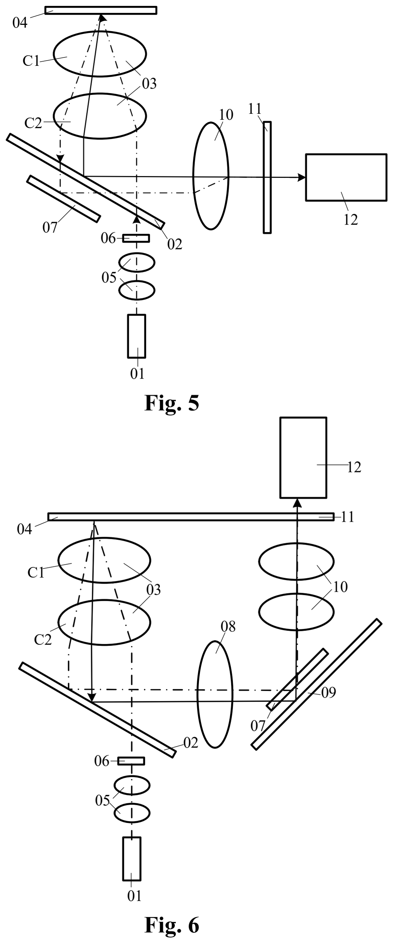

In some embodiments, as shown in Fig. 5, the light guiding assembly includes a third lens group 10, and the light guiding element 02 transmits the first-color light and reflects the second-color light. The color filter element 11 and the wavelength conversion element 04 are driven by different driving devices. The first-color light reflected by the reflection region is incident on the light guiding element 02, transmits the light guiding element to reach the adjustable element 07, is reflected by the adjustable element 07 back to the light guiding element 02, and transmits the light guiding element 02 and the third lens group 10 to reach the color filter element 11; the second-color light is incident on the light guiding element 02 through the first lens group 03, is reflected by the light guiding element 02, and transmits the third lens group 10 to reach the color filter element 11. The adjustable element 07 can be a mirror or a reflective diffuser. Optionally, the third lens group 10 includes at least one aspherical mirror.

In some embodiments, as shown in Fig. 6, the light guiding assembly includes a second lens group 08, a light splitting and combining element 09, and a third lens group 10. The color filter element 11 and the wavelength conversion element 04 share one driving device. The light guiding element 02 reflects the first-color light and the second-color light, and the adjustable element 07 transmits the second-color light and reflects the first-color light. For example, the light guiding element 02 reflects blue light, red light, and green light. The adjustable element transmits red and green light and reflects blue light, a reflection wavelength band at least ranges from 450 nm to 470 nm, and a transmission wavelength band at least ranges from 510 nm to 680 nm. The light guiding element 02 can be a mirror or a reflective diffuser having a target light-transmitting region. Optionally, a distance between the adjustable element and the light splitting and combining element is a third distance.

The first-color light reflected by the reflection region is incident on the light guiding element 02, is reflected by the light guiding element 02 and then transmits the second lens group 08 to reach the adjustable element 07, is reflected by the adjustable element 07 to the third lens group 10, and is incident on the color filter element 11 through the third lens group 10; the second-color light is incident on the light guiding element 02 through the first lens group 03, is reflected by the light guiding element 02 and then transmits the second lens group 08 and the adjustable element 07 to reach the light splitting and combining element 09, is reflected by the light splitting and combining element 09 to the third lens group 10, and is incident on the color filter element 11 through the third lens group 10.

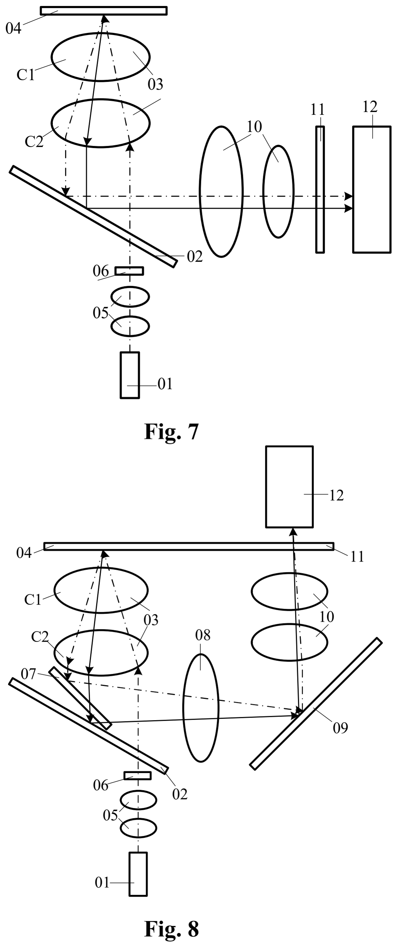

In some embodiments, as shown in Fig. 7, the light guiding assembly includes a third lens group 10, and the light guiding element 02 reflects the first-color light and the second-color light. The first-color light reflected by the reflection region is incident on the light guiding element 02, is reflected by the light guiding element 02 and then transmits the third lens group 10 to reach the color filter element 11; the second-color light is incident on the light guiding element 02 through the first lens group 03, is reflected by the light guiding element 02, and then transmits the third lens group 10 to reach the color filter element 11. In this case, the light homogenizing element can be a fly-eye lens.

In some embodiments, as shown in Fig. 8, the light guiding assembly includes an adjustable element 07, a second lens group 08, a light splitting and combining element 09, and a third lens group 10. The adjustable element 07 reflects the first-color light and transmits the second-color light, and the light guiding element 02 reflects the second-color light. For example, the adjustable element 07 reflects blue light and transmits red light and/or green light; and the light guiding element 02 reflects blue light, and can be a mirror or a reflective diffuser having a target light-transmitting region, among others. The color filter element and the wavelength conversion element are driven by a same driving device. The light guiding element is provided not parallel to the adjustable element. For example, if the light guiding element is set at 45 degrees with respect to the horizontal line, the adjustable element is then set at an angel other than 45 degrees with respect to the horizontal line.

The first-color light reflected by the reflection region is incident on the adjustable element 07, is reflected by the adjustable element 07 to the second lens group 08, is incident on the light splitting and combining element 09 through the second lens group 08, and is incident on the color filter element 11 through the light splitting and combining element 09 and the third lens group 10; and the second-color light is incident on the adjustable element 07 through the first lens group 03, transmits the adjustable element 07 to reach the light guiding element 02, is reflected by the light guiding element 02 to reach the second lens group 08, transmits the second lens group 08 to reach the light splitting and combining element 09, and is incident on the color filter element 11 through the light splitting and combining element 09 and the third lens group 10.

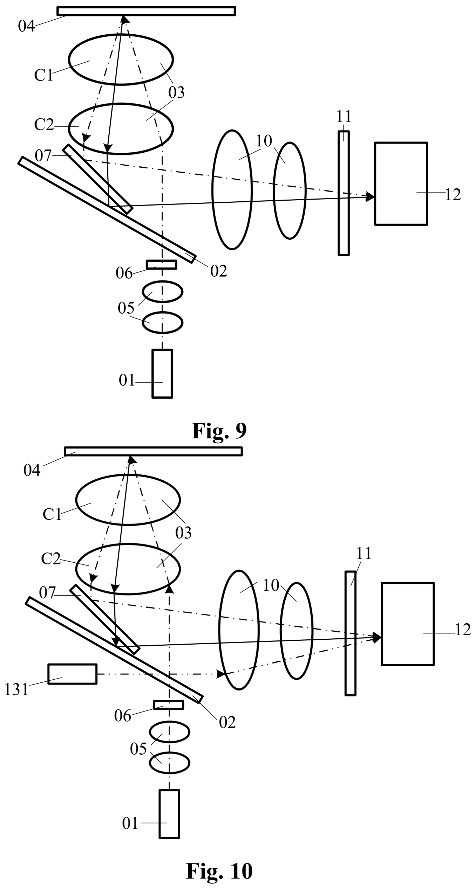

In some embodiments, as shown in Fig. 9, the light guiding assembly includes an adjustable element 07 and a third lens group 10. The adjustable element 07 reflects the first-color light and transmits the second-color light, the light guiding element 02 reflects the second-color light, and the color filter element and the wavelength conversion element are driven by different driving devices. The light guiding element 02 and the adjustable element 07 can refer to those as shown in Fig. 8.

The first-color light reflected by the reflection region is incident on the adjustable element 07, is reflected by the adjustable element 07 to the third lens group 10, and is incident on the color filter element 11 through the third lens group 10; the second-color light is incident on the adjustable element 07 after transmitting the first lens group 03, transmits the adjustable element 07 to reach the light guiding element 02, is reflected by the light guiding element 02 to the third lens group 10 after being, and is incident on the color filter element 11 after transmitting the third lens group 10.

Optionally, one or more of the adjustable element 07, the light guiding element 02, and the light splitting and combining element 09 each can be an element having a certain curvature, and the curvature is set so that the first-color light and the second-color light incident on the light homogenizing element can be coaxial. In this case, the second lens group and/or the third lens group can be not provided. For example, in a condition that the adjustable element 07 shown in Fig. 3 is a mirror having a certain curvature, the second lens group and/or the third lens group can be not provided, and the first-color light reflected by the adjustable element 07 and the second-color light reflected by the light guiding element 02 can be coaxial, and finally incident on the light homogenizing element.

In some embodiments, the light source system includes a supplementary light source assembly 13, and supplementary light generated by the supplementary light source assembly 13 can be incident on the light guiding assembly through the light guiding element, is incident on the light homogenizing element through the light guiding assembly, and then exits after being homogenized by the light homogenizing element. Thus, the color gamut and brightness of the light source system can be improved. Optionally, the supplementary light can be incident on the light guiding assembly through the target light-transmitting region of the light guiding element, or the light guiding assembly can transmit the supplementary light.

The supplementary light source assembly 13 can include at least one supplementary light source, and the supplementary light source can be an LED light source or an LD light source. Each light source can be a single light-emitting chip or a light-emitting chip array. The supplementary light includes supplementary light having at least one wavelength band. A polarization state of the supplementary light is not limited, and can be a P state or an S state, or a P state and an S state. Optionally, the supplementary light source assembly 13 includes an LD light source or an LED light source that generates at least one of red light, green light, and blue light, and the supplementary light is at least one of red laser, green laser, and blue laser, or red LED light, green LED light, and blue LED light. For example, the supplementary light source assembly 13 includes one LD light source that generates the red laser, and the supplementary light is the red laser. Optionally, the supplementary light source assembly 13 includes a mixed light source of an LED light source and an LD light source. The supplementary light includes at least two of the red laser, the green laser, and the blue laser, and red LED light, green LED light, and blue LED light. Optionally, the supplementary light source assembly 13 can be adaptively provided with a focusing/collimating lens group.

As shown in Fig. 10, the supplementary light source assembly 13 includes a supplementary light source 131, and the supplementary light generated by the supplementary light source 131 can be incident on the third lens group 10 through the target light-transmitting region of the light guiding element 02, incident on the color filter element 11 through the third lens group 10, incident on the light homogenizing element 12 after being filtered by the color filter element 11, and then exits after being homogenized by the light homogenizing element 12.

In some embodiments, the wavelength conversion element includes a transmitting region. The supplementary light generated by the supplementary light source assembly 13 is incident on the first lens group through the transmitting region of the wavelength conversion element, is incident on the light guiding assembly through the first lens group, is incident on the light homogenizing element through the light guiding assembly, and then exits after being homogenized by the light homogenizing element. The transmitting region can be any one of a through-hole, a light-transmitting substrate (such as white glass), a diffusion region, and an anti-reflection region. The diffusion region can be a diffuser, and the anti-reflection region can be a light-transmitting substrate coated with an anti-reflection film. Optionally, the supplementary light generated by the supplementary light source assembly 13 can be combined into an optical path of the light source system bypassing an edge of one end of the wavelength conversion element without passing through the wavelength conversion element.

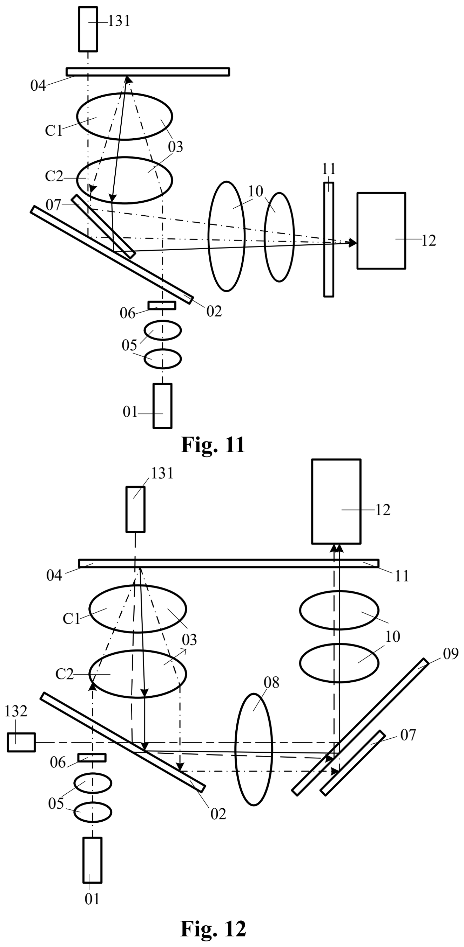

As shown in Fig. 11, the supplementary light source assembly 13 includes a supplementary light source 131, the adjustable element 07 transmits the second-color light and the supplementary light and reflects the first-color light, and the light guiding element 02 reflects the second-color light and the supplementary light. For example, the second-color light is green light and/or red light, and the supplementary light is the red laser and/or the green laser. The supplementary light generated by the supplementary light source 131 is incident on the first lens group 03 through the transmitting region of the wavelength conversion element 04, is incident on the light guiding element 02 after passing through the first lens group 03 and the adjustable element 07, is reflected by the light guiding element 02, is incident on the color filter element 11 through the third lens group 10, is incident on the light homogenizing element 12 after being filtered by the color filter element 11, and then emits after being homogenized by the light homogenizing element 12.

In some embodiments, as shown in Fig. 12, the supplementary light source assembly 13 includes a first supplementary light source 131 and a second supplementary light source 132. The supplementary light generated by the first supplementary light source 131 is incident on the first lens group 03 through the transmitting region of the wavelength conversion element 04, is incident on the light guiding element 02 through the first lens group 03 and the adjustable element 07, and is reflected by the light guiding element 02 to the third lens group 10. The supplementary light generated by the second supplementary light source 132 can transmit the light guiding element 02 and is incident on the third lens group 10, the supplementary light that is incident on the third lens group 10 transmits the third lens group 10, is incident on the color filter element 11, is incident on the light homogenizing element 12 after being filtered by the color filter element 11, and then exits after being homogenized by the light homogenizing element 12. For example, the first supplementary light source 131 is a red laser light source, and the second supplementary light source 132 is a red LED light source. The red laser and the red LED light can have different wavelength ranges. The light guiding element 02 can combine light by wavelength; or the light guiding element 02 includes a target region which reflects the red laser. In this case, the wavelength conversion element can include only a wavelength conversion region that generates green light.

In some embodiments, the light source system includes a light splitting and combining element, the light splitting and combining element reflects the first-color light and the second-color light and transmits supplementary light generated by the supplementary light source assembly; or the light splitting and combining element reflects the second-color light and transmits the first-color light and the supplementary light generated by the supplementary light source assembly; and the adjustable element reflects the first-color light and transmits the supplementary light generated by the supplementary light source assembly. Optionally, the light splitting and combining element can be provided between the color filter element and the light guiding element. The supplementary light is incident on the color filter element through the light splitting and combining element and the third lens group, is incident on the light homogenizing element after being filtered by the color filter element, and then exits after being homogenized by the light homogenizing element.

Optionally, the light splitting and combining element can have dichroic characteristics, and for example, it is coated with a dichroic film, such that the light splitting and combining element reflects the first-color light and the second-color light and transmits the supplementary light generated by the supplementary light source. For example, if the wavelength conversion region is excited to generate green light, and the supplementary light generated by the supplementary light source assembly 13 is the red laser, then the light splitting and combining element reflects blue light and green light and/or red light (fluorescence) and transmits the red laser. A reflection wavelength band includes at least 420 nm to 620 nm, and a transmission wavelength band includes at least 635 nm to 680 nm.

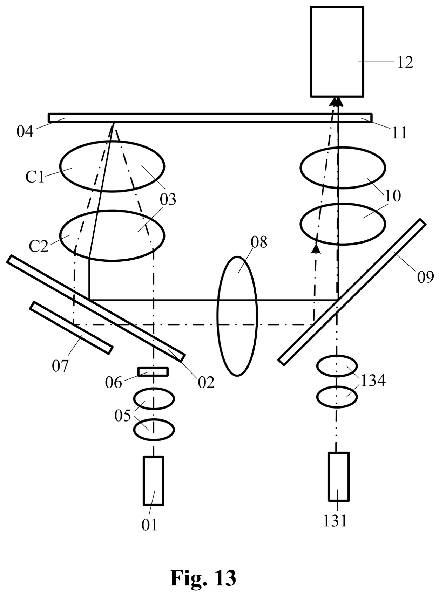

Optionally, the light splitting and combining element includes a supplementary light-transmitting region which transmits the supplementary light generated by the supplementary light source assembly. The supplementary light-transmitting region can be any one of a through-hole, a diffusion region, an anti-reflection region, a polarizing light splitting region, and a dichroic region. The diffusion region can be a diffuser; the anti-reflection region can be a light-transmitting substrate coated with an anti-reflection film; the polarizing light splitting region can be a light-transmitting substrate coated with a polarizing beam splitting film (such as reflecting or transmitting S light, transmitting or reflecting P light); and the supplementary light-transmitting region can also be a light-transmitting substrate coated with a dichroic film, and the dichroic film reflects the first-color light and the second-color light and transmits the supplementary light. For example, as shown in Fig. 13, it is assumed that, the wavelength conversion region is excited to generate green light and red light, the supplementary light generated by the first supplementary light source 131 is the red laser, then the light splitting and combining element reflects red light, blue light, and green light, and the supplementary light (the red laser) transmits the supplementary light-transmitting region. The supplementary light-transmitting region can correspondingly be a diffuser, a through-hole, a light-transmitting substrate coated with an anti-reflection film, among others. A size of the supplementary light-transmitting region is not limited and can be within a range of 8 mm * 8 mm, for example, 5.5 mm * 3.6 mm. Optionally, the light source assembly further includes a focusing/collimating lens group 134 corresponding to the supplementary light source.

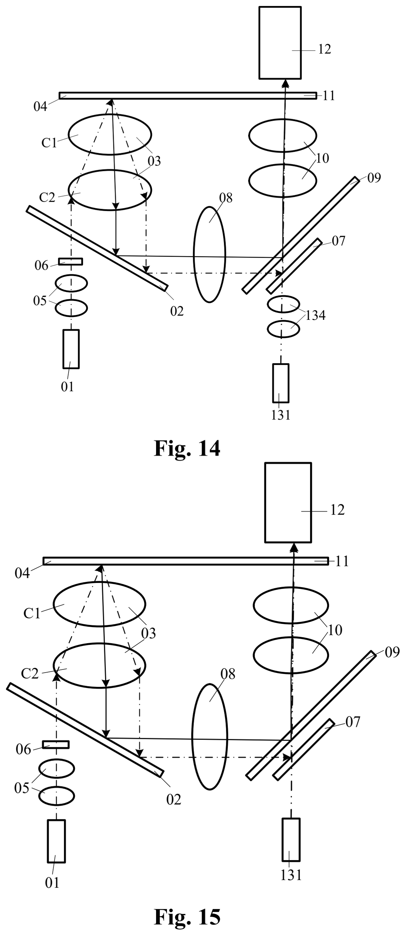

Optionally, as shown in Fig. 14, the adjustable element 07 can have dichroic characteristics. The adjustable element 07 reflects the first-color light and transmits the supplementary light. For example, the adjustable element 07 reflects the blue laser and transmits the red laser and/or the green laser. The supplementary light transmitting the adjustable element 07 can be incident on the third lens group 10 through the supplementary light-transmitting region of the light splitting and combining element 09.

Optionally, as shown in Fig. 15, it is assumed that, the light source 01 generates the blue laser in a first polarization state, and the first supplementary light source 131 in the supplementary light source assembly 13 generates the blue laser and red or green laser in a second polarization state. Under this condition, the adjustable element 07 can have polarization characteristics (for example, coated with a polarizing beam splitting film) to reflect the blue laser in the first polarization state and transmit the blue laser and the red or green laser in the second polarization state. The blue laser and the red or green laser, after transmitting the adjustable element 07, can be incident on the third lens group 10 through the supplementary light-transmitting region of the light splitting and combining element 09.

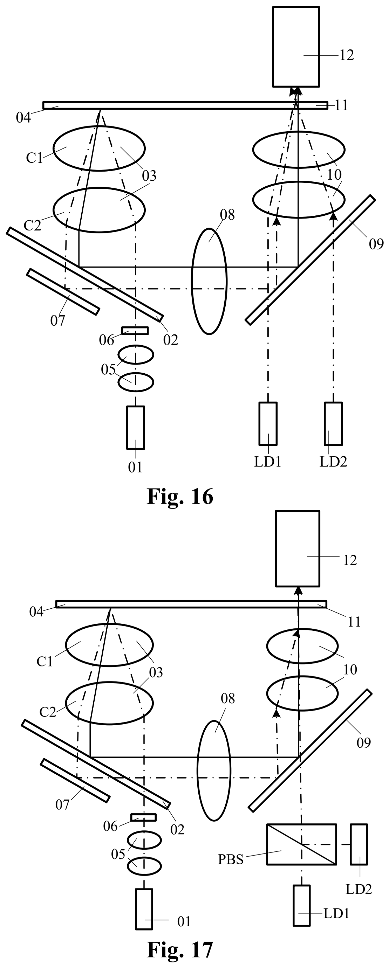

In some embodiments, the supplementary light source assembly 13 includes a first supplementary light source and a second supplementary light source, and the supplementary light includes light generated by a first-color light source and light generated by a second-color light source. The first supplementary light source and the second supplementary light source can generate light in a same wavelength band or can generate light in different wavelength bands. For example, the first supplementary light source and the second supplementary light source both generate red light, or one of them generate red light and the other one of them generate blue light. The supplementary light-transmitting region includes a first light-transmitting region and a second light-transmitting region, the first light-transmitting region transmits light generated by the first supplementary light source, and the second light-transmitting region transmits light generated by the second supplementary light source. For example, as shown in Fig. 16, a first light-transmitting region and a second light-transmitting region are respectively provided near two ends of the light splitting and combining element. The first supplementary light source LD1 and the second supplementary light source LD2 are both LD light sources that generate the red laser, the red laser transmitting the first light-transmitting region and the second light-transmitting region, respectively.

In some embodiments, the supplementary light source assembly 13 includes a polarizing light combining element, the supplementary light source assembly 13 includes a first supplementary light source and a second supplementary light source, and the first supplementary light source and the second supplementary light source generate light having different polarization states. The light having different polarization states generated by the first supplementary light source and the second supplementary light source are combined by the polarizing light combining element and incident on the supplementary light-transmitting region. Optionally, the first supplementary light source and the second supplementary light source can also generate light having a same polarization state. Then, the light generated by one light source is converted into light having a different polarization state by a phase conversion element (such as a quarter wave plate), and then the two kinds of light are combined by the polarizing light combining element.

The polarizing light combining element can be a polarizing beam splitter (PBS) or a polarizing beam splitting sheet, and light in different polarization states can be combined using the polarization characteristics of the PBS. The corresponding supplementary light-transmitting region can be a through-hole, a light-transmitting substrate, a diffuser, or a polarizing beam splitting sheet. Optionally, as shown in Fig. 17, light in different polarization states generated by the first supplementary light source LD1 and the second supplementary light source LD2 can be combined by PBS and incident on the supplementary light-transmitting region. For example, the light splitting and combining element 09 reflects the blue laser and red or green fluorescence and transmits the red laser and the green laser. The red laser and the green laser have different polarization states. A reflection wavelength band is 420 nm to 620 nm, and a transmission wavelength band is 635 nm to 680 nm. The supplementary light (the red laser and the green laser) transmits the supplementary light-transmitting region. Optionally, the red laser, the green laser, and the blue laser that generated by the first supplementary light source LD1 and that each having a first polarization state, and the red laser, the green laser, and the blue laser that generated by the first supplementary light source LD1 and that each having a second polarization state, which are combined by the polarizing light combining element and incident on the supplementary light-transmitting region of the light splitting and combining element.

In some embodiments, the supplementary light-transmitting region reflects light in a first polarization state and transmits light in a second polarization state, the supplementary light includes target light capable of exciting the wavelength conversion region to generate a second-color light, and the target light is light in a first polarization state. The color filter element 11 of the light source system includes a region capable of reflecting the target light. As shown in Fig. 18, a phase conversion element 14 is provided between the color filter element 11 and the light splitting and combining element 09. The first polarization state and the second polarization state are not limited. For example, the first polarization state can be a P state and the second polarization state can be an S state. The target light can be blue light (such as the blue laser), UV light, among others. The phase conversion element can be a quarter wave plate.

When the first-color light is incident on the wavelength conversion region after being focused by the first lens group, the target light is incident on the color filter element 11 through the supplementary light-transmitting region and the phase conversion element 14, is reflected by the color filter element 11, is converted into light having a second polarization state by the phase conversion element again 14, is incident on the supplementary light-transmitting region, and is reflected by the supplementary light-transmitting region to finally reach the wavelength conversion region. The first-color light generated by the light source and the target light generated by the supplementary light source assembly 13 can be fully utilized to improve the utilization rate of light.

For example, it is assumed that, the first-color light is P-state blue laser, the target light is S-state blue laser, and the supplementary light-transmitting region transmits the S-state light and reflects the P-state light; the supplemental light source assembly generates the red laser and the green laser; and the wavelength conversion region includes a sub-region 1 generating red light and a sub-region 2 generating green light. As shown in Fig. 18, the following are presented.

In a condition that the light source system needs to generate blue light, the light source 01 generates P-state blue laser, and the supplementary light source assembly 13 generates S-state blue laser; the blue laser generated by the light source 01 transmits the beam contracting lens group 05, the diffuser 06, the target light-transmitting region of the light guiding element 02, and the first lens group 03to reach the reflection region of the wavelength conversion element 04, is reflected by the reflection region, transmits the first lens group 03 and the light guiding element 02 to reach the adjustable element 07, is reflected by the adjustable element 07 back to the light guiding element 02, transmits the light guiding element 02 and the second lens group 08 to reach the light splitting and combining element 09, is reflected by the light splitting and combining element 09, and is combined with the S-state blue laser which is generated by the supplementary light source assembly 13 and which transmits the supplementary light-transmitting region of the light splitting and combining element 09; the combined light is incident on the third lens group 10, is incident on the color filter element 11 after being focused by the third lens group 10, is filtered by a filtering region corresponding to blue light of the color filter element 11, and then is incident on the light homogenizing element 12, and then exits after being homogenized by the light homogenizing element 12.

In a condition that the light source system needs to generate red light, the light source 01 generates P-state blue laser, and the supplementary light source assembly 13 generates S-state blue laser and red laser. The blue laser generated by the light source 01 transmits the beam contracting lens group 05, the diffuser 06, the target light-transmitting region of the light guiding element 02, and the first lens group 03, and is incident on the sub-region 1 of the wavelength conversion element 04, and the sub-region 1 is excited by the blue laser to generate red light. The S-state blue laser generated by the supplementary light source assembly 13 is incident on the color filter element 11 through the supplementary light-transmitting region and the phase conversion element 14, is reflected by a region of the color filter element 11 other than the filtering region corresponding to blue light, and is converted into P-state blue laser by the phase conversion element 14 again, is incident on the supplementary light-transmitting region, and is reflected by the supplementary light-transmitting region to finally reach the sub-region 1 of the wavelength conversion element 04, and the sub-region 1 is excited to exit red light. The excited red light is incident on the first lens group 03, is incident on the light guiding element 02 through the first lens group 03, is reflected by the light guiding element 02, transmits the second lens group 08 to reach the light splitting and combining element 09, is reflected by the light splitting and combining element 09, transmits the third lens group 10to reach the color filter element 11, is filtered by a filtering region corresponding to red light of the color filter element 11, is incident on the light homogenizing element 12, and then exits after being homogenized by the light homogenizing element 12; and when the light source system needs to generate green light, the same principle as the generation of red light can be employed, which will not be repeated herein.

It can be seen from the above contents that, in the light source system provided in the embodiments, the light source and the lens group are provided off-axis, that is, when the first-color light generated by the light source is incident on the lens group through the light guiding element or is directly incident on the lens group without through the light guiding element, a certain distance is formed between an optical axis of the light spot and an optical axis of the lens group, and the first-color light serves as excitation light for the wavelength conversion region after being focused by the lens group, such that loss of the first-color light and excited second-color light on the light guiding element can be reduced. Moreover, when the excited second-color light is finally incident on the light homogenizing element, a formed light spot has a shape of ellipse elliptical which corresponds to a long side and a short side of the light homogenizing element, thereby improving a utilization rate of the light. Furthermore, the diffuser can be provided before light generated by the light source is incident on the wavelength conversion region, which can reduce an energy density of the light on the wavelength conversion region and improve an excitation efficiency of a wavelength conversion material. A through-hole can be provided in the light guiding element, and the first-color light is incident on the lens group through the through-hole to reduce loss of the first-color light when it passes through the light guiding element. Additionally, by providing the beam contracting lens group before the light generated by the light source is incident on the light guiding element, an area of the through-hole can be smaller, such that an overlapping area between the through-hole and a light spot of the second-color light can be smaller, and the loss of the second-color light can be lower. The light source system in the embodiments can improve the utilization rate of light and thus improve brightness of the projection device.

Fig. 19 is a schematic diagram of functional modules of a projection device according to the present disclosure. As shown in Fig. 19, the projection device includes an image processor 101 and a projection optical engine 102.

The image processor 101 can be a microcontroller, a dedicated image processing chip, or the like. The microcontroller can be an ARM chip, a microcontroller unit (MCU) or the like. The dedicated image processing chip can be an image signal processor (ISP), a graphics processing unit (GPU), an embedded neural-network process units (NPU), or the like. The image processor 101 can be used for video decoding, image quality processing, or the like.

The projection optical engine 102 can include a driver chip, a spatial light modulator, a light source system described in the above embodiments, or the like. The spatial light modulator can be a digital micromirror device (DMD), a liquid crystal display (LCD), a liquid crystal on silicon (LCOS), or the like. The driver chip corresponds to the spatial light modulator, for example, a digital micromirror device can be driven by a digital light processing element (DLP). The projection optical engine 102 is configured to project an image to be projected into a projection image.

In some embodiments, the projection device includes one or more central controllers 103 serving as processing cores, and the central controller can be a controller, such as a CPU, ARM, or MCU. The central controller 103 is a control center of the projection device, connects various parts of the entire projection device using various interfaces and lines, can run or execute software programs and/or operating systems stored in a memory 104, and call data stored in the memory 104. Optionally, the image processor 101 and the central controller 103 can be integrated into one processor.

In some embodiments, the projection device includes one or more memories 104 that each are a computer-readable storage media, an input module 105, a communication module 106, a power supply 107, or the like. It will be understood by those skilled in the art that, the projection device structure shown in Fig. 19 does not constitute a limitation of the projection device, and the projection device can include more or fewer components than those shown in Fig. 19, or a combination of some components, or have different arrangements of components.

The memory 104 can be configured to store a software program and an operating system, and the central controller 103 executes various functional applications and data processing by running the software program and the operating system stored in the memory 104. The memory 104 can mainly include a program storage area and a data storage area, in which the program storage area can store an operating system, an application program required for at least one function (such as a sound playback function, an image playback function), or the like, and the data storage area can store data created according to usage of the projection device. In addition, the memory 104 can include a high-speed random access memory and can also include a non-volatile memory, such as at least one magnetic disk storage device, flash memory device, or other volatile solid state storage device. Accordingly, the memory 104 can also include a memory controller to provide access to the memory 104 by the central controller 103.

The projection device can include an input module 105 which is configured to receive input numeric or character information and generate remote control, keyboard, mouse, joystick, optical or trackball signal inputs related to user settings and function control.

The projection device can include a communication module 106. In some embodiments, the communication module 106 can include a wireless module through which the projection device can conduct short-range wireless transmissions, thereby providing a user with wireless broadband Internet access. For example, the communication module 106 can be used to help a user to access streaming media or the like.

The projection device includes a power supply 107 for supplying power to each component. In some embodiments, the power supply 107 can be logically connected to the central controller 103 through a power management system, thereby realizing functions such as charging, discharging, and power consumption management through the power management system. The power supply 107 can also include any components such as one or more DC or AC power supplies, a recharging system, a power failure detection circuit, a power converter or inverter, a power status indicator, or the like.

The terms used in the embodiments of the present disclosure are for the purpose of describing particular embodiments only, but are not intended to limit the present disclosure. As used in the embodiments of the present disclosure and the appended claims, the singular forms "a", "the", and "this" are also intended to include the plurality of forms unless the context clearly indicates otherwise. It should also be understood that, the term "and/or" as used herein refers to and includes any or all possible combinations of one or more associated listed items. The character "/" in this article generally indicates that the related objects before and after are an "or" relationship.

The foregoing descriptions are merely specific embodiments of the present disclosure, but the protection scope of the present disclosure is not limited thereto. Any modification or substitution that could be easily conceived by a person skilled in the art within the technical scope disclosed by the present disclosure shall fall within the protection scope of the present disclosure. Therefore, the protection scope of the present disclosure shall be defined by the scope of the claims.

**Claims**

1. A light source system, comprising:

   a light source;
   a first lens group;
   a wavelength conversion element comprising a wavelength conversion region and a reflection region;
   a light guiding assembly comprising a light guiding element; and
   a light homogenizing element,
   wherein a first-color light generated by the light source is incident on the first lens group through the light guiding element, or the first-color light generated by the light source is incident on the first lens group;
   when the first-color light is incident on the wavelength conversion region after being focused by the first lens group, the wavelength conversion region is excited by the first-color light to emit a second-color light, and the second-color light is incident on the first lens group and is incident on the light guiding assembly through the first lens group;
   when the first-color light is incident on the reflection region after being focused by the first lens group, the first-color light is reflected by the reflection region, and is incident on the light guiding assembly through the first lens group;
   the first-color light or the second-color light that is incident on the light guiding assembly is incident on the light homogenizing element through the light guiding assembly, and exits after being homogenized by the light homogenizing element; and
   a light spot of the second-color light emitted from the first lens group is elliptical, and a distance between an optical axis of the first-color light emitted from the light source to the first lens group and an optical axis of the first lens group is a first distance.

2. The light source system according to claim 1, wherein a beam contracting lens group is further provided between the light source and the light guiding element, the first-color light generated by the light source being contracted by the beam contracting lens group and then incident on the light guiding element.

3. The light source system according to claim 1, wherein a diffuser is further provided between the light source and the light guiding element, the first-color light generated by the light source being diffused and homogenized by the diffuser and then incident on the light guiding element, and a diffusion angle of the diffuser being a first angle.

4. The light source system according to claim 1, wherein an aperture is provided on a side of the light guiding element facing toward the light source, the first-color light generated by the light source being incident on the light guiding element through the aperture.

5. The light source system according to claim 1, wherein the first lens group comprises:

   at least one aspherical mirror each comprising:

      a surface having a radius of curvature within a first preset radius range and an aspherical coefficient within a first preset coefficient range, and
another surface having a radius of curvature within the first preset radius range and an aspherical coefficient within a second coefficient range, and

at least one spherical mirror each comprising:

a surface having a radius of curvature within a second preset radius range, and
another surface having a radius of curvature within a third preset radius range.

6. The light source system according to claim 1, wherein the light guiding element comprises:
a target light-transmitting region, the first-color light generated by the light source transmitting the target light-transmitting region to reach the first lens group, and a length of a target side of the target light-transmitting region being determined according to a length of a long side of the light guiding element, the first distance, and a length of a long axis of a light spot of the first-color light.

7. The light source system according to claim 1, wherein

a distance between a lens closest to the wavelength conversion element in the first lens group and the wavelength conversion element is a second distance; and/or
an angle between the light guiding element and the wavelength conversion element is a second angle; and/or
an angle between a central ray of the first-color light emitted from the first lens group to the wavelength conversion element and a normal line of the wavelength conversion element is greater than or equal to a preset angle; and/or
the light guiding element comprises a target light-transmitting region, which is one of a through-hole, a diffusion region, an anti-reflection region, a polarizing light splitting region, and a dichroic region.

8. The light source system according to claim 1, wherein

the light guiding assembly comprises an adjustable element and a light splitting and combining element; and
a light spot of the first-color light and a light spot of the second-color light are symmetrically incident on the light homogenizing element, and a long axis and a short axis of a light spot of at least one of the second-color light or the first-color light correspond to a long side and a short side of a light incident surface of the light homogenizing element, respectively; and/or a distance between the adjustable element and the light guiding element or the light splitting and combining element is a third distance.

9. The light source system according to claim 1, further comprising:

a color filter element,
wherein the first-color light or the second-color light that is incident on the light guiding assembly is incident on the color filter element through the light guiding assembly, and is incident on the light homogenizing element after being filtered by the color filter element;
the light guiding assembly comprises an adjustable element, a second lens group, a light splitting and combining element, and a third lens group, the light guiding element is configured to reflect the first-color light and the second-color light, and the light splitting and combining element is configured to transmit the first-color light and to reflect the second-color light; the second-color light is incident on the light guiding element through the first lens group, is reflected by the light guiding element and then transmits the second lens group to reach the light splitting and combining element, is reflected by the light splitting and combining element to the third lens group, and is incident on the color filter element through the third lens group; and the first-color light reflected by the reflection region is incident on the light guiding element, is reflected by the light guiding element and then transmits the second lens group and the light splitting and combining element to reach the adjustable element, is reflected by the adjustable element and transmits the light splitting and combining element to reach the third lens group, and is incident on the color filter element through the third lens group; or
the light guiding assembly comprises an adjustable element, a second lens group, a light splitting and combining element, and a third lens group, the light guiding element is configured to reflect the first-color light and the second-color light, and the adjustable element is configured to transmit the second-color light and reflect the first-color light; the first-color light reflected by the reflection region is incident on the light guiding element, is reflected by the light guiding element and then transmits the second lens group to reach the adjustable element, is reflected by the adjustable element to the third lens group, and is incident on the color filter element through the third lens group; and the second-color light is incident on the light guiding element through the first lens group, is reflected by the light guiding element and then transmits the second lens group and the adjustable element to reach the light splitting and combining element, is reflected by the light splitting and combining element to the third lens group, and is incident on the color filter element through the third lens group; or

the light guiding assembly comprises an adjustable element and a third lens group, and the light guiding element is configured to transmit the first-color light and reflect the second-color light; the first-color light reflected by the reflection region is incident on the light guiding element, transmits the light guiding element to reach the adjustable element, is reflected by the adjustable element back to the light guiding element, and transmits the light guiding element and the third lens group to reach the color filter element after; and the second-color light is incident on the light guiding element through the first lens group, is reflected by the light guiding element, and then transmits the third lens group to reach the color filter element; or

the light guiding assembly comprises an adjustable element, a second lens group, a light splitting and combining element, and a third lens group, and the light guiding element is configured to transmit the first-color light and reflect the second-color light; the first-color light reflected by the reflection region is incident on the light guiding element, transmits the light guiding element to reach the adjustable element, is reflected by the adjustable element back to the light guiding element, transmits the light guiding element and the second lens group to reach the light splitting and combining element, and is incident on the color filter element through the light splitting and combining element and the third lens group; and the second-color light is incident on the light guiding element through the first lens group, is reflected by the light guiding element and then transmits the second lens group to reach the light splitting and combining element, and is incident on the color filter element through the light splitting and combining element and the third lens group; or

the light guiding assembly comprises an adjustable element, a second lens group, a light splitting and combining element, and a third lens group, the adjustable element is configured to reflect the first-color light and transmit the second-color light, and the light guiding element is configured to reflect the second-color light; the first-color light reflected by the reflection region is incident on the adjustable element, is reflected by the adjustable element to the second lens group, is incident on the light splitting and combining element through the second lens group, and is incident on the color filter element through the light splitting and combining element and the third lens group; and the second-color light is incident on the adjustable element through the first lens group, transmits the adjustable element to reach the light guiding element, is reflected by the light guiding element to reach the second lens group, transmits the second lens group to reach the light splitting and combining element, and is incident on the color filter element through the light splitting and combining element and the third lens group; or

the light guiding assembly comprises an adjustable element and a third lens group, the adjustable element is configured to reflect the first-color light and transmit the second-color light, and the light guiding element is configured to reflect the second-color light; the first-color light reflected by the reflection region is incident on the adjustable element, is reflected by the adjustable element to the third lens group, and is incident on the color filter element through the third lens group; and the second-color light is incident on the adjustable element through the first lens group, transmits the adjustable element to reach the light guiding element, is reflected by the light guiding element to the third lens group, and is incident on the color filter element through the third lens group; or

the light guiding assembly comprises a third lens group; the light guiding element is configured to reflect the first-color light and the second-color light; the first-color light reflected by the reflection region is incident on the light guiding element, is reflected by the light guiding element, and then transmits the third lens group to reach the color filter element; and the second-color light is incident on the light guiding element through the first lens group, is reflected by light guiding element, and then transmits the third lens group to reach the color filter element.

**10.** The light source system according to claim 1, further comprising:

a supplementary light source assembly; and
a light splitting and combining element,
wherein the light splitting and combining element is configured to reflect the first-color light and the second-color light and transmit supplementary light generated by the supplementary light source assembly, or light splitting and combining element is configured to reflect the second-color light and transmit the first-color light and the supplementary light generated by the supplementary light source assembly; and
the adjustable element is configured to reflect the first-color light and transmit the supplementary light generated by the supplementary light source assembly.

**11.** The light source system according to claim 10, wherein the light splitting and combining element comprises:
a supplementary light-transmitting region, which is configured to transmit the supplementary light generated by the supplementary light source assembly, and which is one of a through-hole, a diffusion region, an anti-reflection region, a polarizing light splitting region, and a dichroic region.

**12.** The light source system according to claim 11, wherein

the supplementary light source assembly comprises a first supplementary light source and a second supplementary light source, and the supplementary light comprises light generated by a first-color light source and light generated by a second-color light source; and

the supplementary light-transmitting region comprises a first light-transmitting region configured to transmit light generated by the first supplementary light source, and a second light-transmitting region configured to transmit light generated by the second supplementary light source.

**13.** The light source system according to claim 11, wherein

the supplementary light source assembly comprises a polarizing light combining element, and the supplementary light source assembly comprises a first supplementary light source and a second supplementary light source that are respectively configured to generate light having different polarization states; and

the light having different polarization states respectively generated by the first supplementary light source and the second supplementary light source are combined by the polarizing light combining element and then incident on the supplementary light-transmitting region.

**14.** The light source system according to claim 11, wherein

the supplementary light-transmitting region is configured to reflect light having a first polarization state and transmit light having a second polarization state, the supplementary light comprises target light capable of exciting the wavelength conversion region to generate the second-color light, and the target light is the light having the first polarization state;

the light source system further comprises a color filter element comprising a region configured to reflect the target light, a phase conversion element being provided between the color filter element and the light splitting and combining element; and

when the first-color light is incident on the wavelength conversion region after being focused by the first lens group, the target light is incident on the color filter element through the supplementary light-transmitting region and the phase conversion element, is converted into the light having the second polarization state by the phase conversion element again after being reflected by the color filter element, is incident on the supplementary light-transmitting region, and is reflected by the supplementary light-transmitting region to finally reach the wavelength conversion region.

**15.** The light source system according to claim 1, further comprising:

a supplementary light source assembly,

wherein the wavelength conversion element comprises a transmitting region; and

supplementary light generated by the supplementary light source assembly is incident on the first lens group through the transmitting region of the wavelength conversion element, is incident on the light guiding assembly through the first lens group, is incident on the light homogenizing element through the light guiding assembly, and exits after being homogenized by the light homogenizing element.

**16.** The light source system according to claim 1, further comprising:

a supplementary light source assembly, wherein supplementary light generated by the supplementary light source assembly is incident on the light guiding assembly through the light guiding element, is incident on the light homogenizing element through the light guiding assembly, and then exits after being homogenized by the light homogenizing element.

**17.** A projection device, comprising the light source system according to any one of claims 1 to 16.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

## INTERNATIONAL SEARCH REPORT

| International application No. |
| --- |
| **PCT/CN2024/082720** |

**A.    CLASSIFICATION OF SUBJECT MATTER**

G03B27/10(2006.01)i;  G03B21/20(2006.01)i

According to International Patent Classification (IPC) or to both national classification and IPC

**B.    FIELDS SEARCHED**

Minimum documentation searched (classification system followed by classification symbols)

IPC: G03B

Documentation searched other than minimum documentation to the extent that such documents are included in the fields searched

Electronic data base consulted during the international search (name of data base and, where practicable, search terms used)

CNABS, CNTXT, VEN, ENTXTC: 波长转换, 色轮, 匀光, 分光, 合光, 调光, 反射, 透射, 椭圆, 光轴, 补充, wheel, wavelength, adjust+, ellipse, axis, complement

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116430600 A (XGIMI TECHNOLOGY CO., LTD.) 14 July 2023 (2023-07-14) description, paragraphs 23-79, and figures 1-10 | 1-17 |
| PX | CN 116430662 A (YIBIN XGIMI OPTOELECTRONIC CO., LTD.) 14 July 2023 (2023-07-14) description, paragraphs 27-88, and figures 1-16 | 1-17 |
| Y | CN 110888290 A (APPOTRONICS CORP., LTD.) 17 March 2020 (2020-03-17) description, paragraphs 23-36, and figures 1-3 | 1-17 |
| Y | WO 2023046197 A1 (HISENSE LASER DISPLAY CO., LTD.) 30 March 2023 (2023-03-30) description, paragraph 64, and figures 8-10 | 1-17 |
| Y | CN 109557754 A (APPOTRONICS CORP., LTD.) 02 April 2019 (2019-04-02) description, paragraph 24, and figure 1 | 8-9 |
| Y | CN 113934097 A (QINGDAO HISENSE LASER DISPLAY CO., LTD.) 14 January 2022 (2022-01-14) description, paragraph 34, and figure 4a | 8-9 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 July 2024** | **15 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/082720** |

**C.     DOCUMENTS CONSIDERED TO BE RELEVANT**

| Category* | Citation of document, with indication, where appropriate, of the relevant passages | Relevant to claim No. |
| --- | --- | --- |
| Y | CN 111077720 A (APPOTRONICS CORP., LTD.) 28 April 2020 (2020-04-28) description, paragraphs 22-53, and figures 1-9 | 1-17 |
| Y | CN 110874005 A (APPOTRONICS CORP., LTD.) 10 March 2020 (2020-03-10) description, paragraphs 33-79, and figures 1-5 | 1-17 |

Form PCT/ISA/210 (second sheet) (July 2022)

## INTERNATIONAL SEARCH REPORT
### Information on patent family members

International application No.

**PCT/CN2024/082720**

| Patent document cited in search report | | | Publication date (day/month/year) | Patent family member(s) | | | Publication date (day/month/year) |
|---|---|---|---|---|---|---|---|
| CN | 116430600 | A | 14 July 2023 | None | | | |
| CN | 116430662 | A | 14 July 2023 | None | | | |
| CN | 110888290 | A | 17 March 2020 | WO | 2020048124 | A1 | 12 March 2020 |
| WO | 2023046197 | A1 | 30 March 2023 | CN | 118043737 | A | 14 May 2024 |
| CN | 109557754 | A | 02 April 2019 | WO | 2019061820 | A1 | 04 April 2019 |
| CN | 113934097 | A | 14 January 2022 | None | | | |
| CN | 111077720 | A | 28 April 2020 | WO | 2020078188 | A1 | 23 April 2020 |
| CN | 110874005 | A | 10 March 2020 | US | 2021218937 | A1 | 15 July 2021 |
| | | | | US | 11223806 | B2 | 11 January 2022 |
| | | | | WO | 2020048123 | A1 | 12 March 2020 |

Form PCT/ISA/210 (patent family annex) (July 2022)